# EUROPÄISCHE PATENTSCHRIFT

(11) **EP 0 858 965 B1**
(45) Veröffentlichungstag und Bekanntmachung des Hinweises auf die Patenterteilung: **26.04.2000**
(21) Anmeldenummer: 97102505.1
(22) Anmeldetag: 17.02.1997
(51) Int. Cl.: B66B 11/04, H02K 41/03

(54) **Linearmotor zum Antrieb einer Aufzugskabine**
Linear motor for driving an elevator car
Moteur linéaire pour l'entraînement d'une cabine d'ascenseur

(43) Veröffentlichungstag der Anmeldung: 19.08.1998
(73) Patentinhaber: Thyssen Aufzugswerke GmbH, 73765 Neuhausen a.d.F. (DE)
(72) Erfinder: Jessenberger, Ralf, Dr., 70771 Leinfelden-Echterdingen (DE)
(74) Vertreter: Hoeger, Stellrecht & Partner

(56) Entgegenhaltungen:
- DE-U- 9 402 427
- US-A- 4 924 128
- US-A- 5 183 980
- US-A- 5 225 725
- US-A- 5 235 145

## Beschreibung

Die vorliegende Erfindung betrifft einen Linearmotor für Aufzüge zum Antrieb einer in einem Aufzugsschacht geführten Aufzugskabine mit mindestens einer am Aufzugsschacht oder an der Aufzugskabine festlegbaren Reihe Statorwicklungen und mit mindestens einer Reihe Erregermagnete abwechselnder Polarität, die den Statorwicklungen in einem Abstand gegenüberliegen und an der Aufzugskabine bzw. am Aufzugsschacht fixierbar sind.

Die Erfindung betrifft außerdem einen Aufzug mit einer in einem Aufzugsschacht verfahrbaren Aufzugskabine.

Aufzüge sehr hoher Gebäude sollen bei möglichst geringem Platzbedarf hohe Förderleistungen erzielen. Diese Anforderung kann dadurch erfüllt werden, daß mehrere Aufzugskabinen mit hohen Geschwindigkeiten bei kleinem Aufzugskabinengewicht in einem Aufzugsschacht bewegt werden. Hierfür ist allerdings notwendige Bedingung, daß die Aufzugskabinen ohne Seil direkt angetrieben werden. Es besteht aufgrund der bei Leerfahrt stark verringerten Masse insbesondere die Möglichkeit, leere Aufzugskabinen mit hoher Geschwindigkeit und mit hoher Beschleunigung zu bewegen und damit die Wartezeit erheblich zu verkürzen.

Für den Direktantrieb eines seillosen Aufzugs eignet sich insbesondere der eingangs genannte Linearmotor, wobei die Statorwicklungen, die die Primärspulen des Linearmotors ausbilden, üblicherweise an einer Wand des Aufzugsschachts und die Erregermagnete an der Aufzugskabine gehalten sind. An den Linearmotor wird die Bedingung gestellt, daß er einen günstigen Wirkungsgrad aufweist und die Aufzugskabine und die Aufzugsschachtwand möglichst mit wenig Eigenmasse und Querkräften belasten soll.

Darüber hinaus stellt die Geräuschentwicklung des Linearmotors ein besonderes Problem dar, insbesondere dann, wenn der Motor direkt an der Aufzugskabine festgelegt ist. Geräusche und Vibrationen werden hierbei vorwiegend durch Nutungsharmonische, durch Magnetostriktion und durch zeitveränderliche Magnetkräfte während der Fahrt verursacht. Da ein Direktantrieb für Aufzüge mindestens die gleichen Fahreigenschaften und den gleichen geringen Geräuschpegel in der Aufzugskabine aufweisen soll wie konventionelle hochwertige Seilaufzüge, wird an den Linearmotorantrieb der Aufzüge insbesondere die Anforderung gestellt, möglichst wenig Vibrationen und Geräusche zu erzeugen.

In der europäischen Offenlegungsschrift EP 0 556 595 A1 wird ein Personen-Fördersystem für sehr hohe Gebäude beschrieben, bei dem mittels eines Linearmotors direktangetriebene Aufzugskabinen zum Einsatz kommen. Die Aufzugskabinen können nicht nur in vertikaler Richtung entlang des Aufzugsschachts bewegt werden, sondern zusätzlich durch eine mechanische Vorrichtung auch in horizontaler Richtung. Damit ist ein Wechsel von einem Aufzugsschacht in einen benachbarten Aufzugsschacht möglich, wodurch ein hoher Förderfluß erzielt werden kann, sofern der Wechsel sehr schnell erfolgt. Der Antrieb der Aufzugskabine erfolgt mit Hilfe eines Synchronlangstators, welcher flach an der Schachtrückwand montiert ist. Das korrespondierende Erregerfeld ist an der Rückwand der Aufzugskabine befestigt.

Ein weiterer mit einem Linearmotor betriebener Aufzug ist aus der europäischen Patentschrift EP 0 509 647 B1 bekannt. Um eine hohe Förderleistung zu erzielen, wird in dieser Druckschrift vorgeschlagen, vier Aufzugsschächte und zwei Leerschächte insgesamt kreisförmig anzulegen, wobei jeweils zwei Aufzugsschächte für die Aufwärtsfahrt und die anderen beiden für die Abwärtsfahrt genutzt werden. Jedes Schachtpaar wiederum umfaßt eine Lokal- und eine Expressbahn, und in einigen Stockwerken sind mechanische Vorrichtungen vorgesehen, um die Aufzugskabinen zwischen den Lokal- und Expressbahnen auszutauschen. Auch der in dieser europäischen Patentschrift beschriebene Linearmotorantrieb umfaßt an der Schachtrückwand befestigte Statorspulen und, diesen über einen Luftspalt gegenüberliegend, an der Rückwand der Aufzugskabine angeordnete Erregermagnete.

Sowohl bei dem in der europäischen Offenlegungsschrift EP 0 556 595 A1 beschriebenen Personen-Fördersystem als auch bei dem in der voranstehend genannten europäischen Patentschrift beschriebenen Aufzug wirken durch die Ausbildung des Linearmotors hohe Anziehungskräfte zwischen Erreger und Stator und dadurch hohe Kräfte auf die Aufzugskabine und auf die Wand des Aufzugsschachts. Dies macht eine sehr stabile Konstruktion der Aufzugskabine und der Befestigung des Stators an der Schachtrückwand erforderlich, wodurch wiederum die Masse der Aufzugskabine beträchtlich erhöht wird. Damit der für die Funktion des Linearmotors erforderliche Luftspalt zwischen Stator und Erreger erhalten bleibt, muß zumindest der Erreger mit Abstandsrollen versehen sein, die an der Rückwand der Aufzugskabine gehalten sind. Aufgrund des hohen Anpreßdruckes der Abstandsrollen ist mit starken Vibrationen zu rechnen. Hohe Fahrgeschwindigkeiten sind aus diesem Grund also nur begrenzt realisierbar.

Ein weiteres linearmotorbetriebenes Aufzugssystem ist aus der amerikanischen Patentschrift US-PS 5,183,980 bekannt. Bei diesem Aufzugssystem kommt ebenfalls ein Synchronlangstator sowie ein mittels Permanentmagneten ausgebildetes Erregerfeld zum Einsatz. Das Erregerfeld ist beidseitig an zwei von einander gegenüberliegenden Seitenwänden der Aufzugskabine abstehenden Blechen montiert. Die Vortriebskraft wird von insgesamt vier Statorspulen erzeugt. Die Führung der Aufzugskabine innerhalb des Aufzugsschachts erfolgt mit Hilfe des sogenannten Nullflußverfahrens. Dieses macht sich den Effekt zunutze, daß eine Verschiebung der Aufzugskabine in horizontaler Richtung senkrecht oder parallel zu den seitlich abstehenden Blechen eine Veränderung des Magnetflusses durch die Statorspulen hervorruft, durch die wiederum die Position der Aufzugskabine korrigiert werden kann.

Dieses Nullflußverfahren hat allerdings den Nachteil, daß die zur Führung der Aufzugskabine erforderlichen Führungskräfte erst bei der Fahrt der Aufzugskabine entstehen, so daß die Teile des Linearmotors im Stillstand der Aufzugskabine und bei langsamer Fahrt durch dem Linearmotor unmittelbar benachbarte und auf entsprechend stabilen Führungen angeordnete, hochbelastbare Führungsrollen in Mittelstellung gehalten werden müssen. Außerdem hat sich herausgestellt, daß bei dem aus der US-PS 5,183,980 bekannten linearmotorbetriebenen Aufzugssystem ein guter Wirkungsgrad nur dann erzielt werden kann, wenn die magnetische Feldstärke im Luftspalt groß ist, und dazu sind auf der Seite der Statorspulen über die gesamte Förderhöhe der Aufzugskabine Statorbleche zur Führung des Magnetfelds erforderlich. Während der Durchfahrt der Aufzugskabine und der daran angeordneten Erregermagnete werden die sich gegenüberliegenden Statorbleche starken dynamischen Anziehungskräften ausgesetzt. Dies hat eine hohe Belastung der gesamten Statorkonstruktion und -befestigung zur Folge und erfordert geeignete Maßnahmen zur Vermeidung von Körperschall. Außerdem erfordert das Eigengewicht der über die gesamte Aufzugsschachtlänge reichenden Statorbleche eine sehr stabile Konstruktion des Aufzugsschachts.

Aufgabe der vorliegenden Erfindung ist es, einen Linearmotor für Aufzüge der gattungsgemäßen Art derart auszugestalten, daß er nur geringe Querkräfte auf die Motorträger ausübt sowie möglichst geräuschlos arbeitet und leicht zu montieren ist.

Diese Aufgabe wird bei einem Linearmotor für Aufzüge der eingangs genannten Art erfindungsgemäß dadurch gelöst, daß die Statorwicklungen eisenlos ausgebildet und zwischen zwei einander gegenüberliegenden Erregermagnetreihen angeordnet sind. Die Statorwicklungen tauchen somit in einen Zwischenraum zwischen einander benachbarten Erregermagnete ein, so daß sie beidseitig über einen Luftspalt jeweils einer Erregermagnetreihe gegenüberstehen. Durch eine derartige Anordnung werden die horizontalen Querkräfte, welche bei außermittiger Position der Spulen im Luftspalt auftreten, sehr gering gehalten, und dies wiederum hat zur Folge, daß während der Fahrt der Aufzugskabine praktisch keine dynamischen Querbelastungen auf die Aufzugskabine, die Motorhalterung und/oder die Aufzugskabinenrollenführung wirken. Die Statorwicklungen sind eisenlos ausgestaltet, d.h. sie weisen insbesondere keine magnetischen Blechteile für die Feldführung auf. Derartige Feldführungen erübrigen sich bei der erfindungsgemäßen Ausgestaltung aufgrund der beidseitigen Anordnung von Erregermagnetreihen, denn dadurch kann das Magnetfeld im wesentlichen senkrecht durch die Statorwicklungen hindurchtreten. Aufgrund der eisenlosen Ausgestaltung der Statorwicklungen kann das magnetische Feld durch die Bewegung der Aufzugskabine nicht zeitlich verändert werden, und dies wiederum hat zur Folge, daß praktisch keine Vibrationen oder Körperschall an der Aufzugskabine oder an der Aufzugsschachtwand erzeugt werden.

Die erfindungsgemäße Ausgestaltung hat außerdem den Vorteil, daß durch den Wegfall der üblicherweise benötigten Statorbleche das Eigengewicht der Statorwicklungen kleiner als bisher üblich gehalten werden kann und daher die Belastungen durch die Eigenmasse des erfindungsgemäßen Linearmotors bedeutend geringer sind als bei den bisher bekannten Konstruktionen. Auch durch Magnetostriktion erzeugte Geräusche sind praktisch nicht vorhanden. Außerdem kann die Tragkonstruktion für das den Statorwicklungen beidseitig gegenüberliegende Erregerteil im Verhältnis zum Stand der Technik mit geringerem Gewicht ausgeführt werden, da lediglich statische Anziehungskräfte zwischen den einander gegenüberstehenden, die Statorwicklungen zwischen sich aufnehmenden Erregermagnetreihen auftreten.

Die erfindungsgemäße Konstruktion ermöglicht außerdem auf einfache Weise den nachträglichen Einbau eines seillosen Antriebs in einen bestehenden Aufzugsschacht, da die Statorwicklungen nur ein verhältnismäßig geringes Eigengewicht aufweisen und deshalb bei gegebenen statischen Anforderungen beispielsweise an den vorhandenen Schachtwänden befestigt werden können. Dadurch kann bei gleicher Schachtquerschnittsausnutzung wie bei Seilaufzügen mehr als eine Aufzugskabine im Aufzugsschacht fahren, und somit kann der vorliegende Raum für Aufzüge in einem Gebäude effizient genutzt bzw. bei der Planung neuer Gebäude stark verringert werden.

Mit Hilfe des erfindungsgemäßen Linearmotorantriebs kann durch die erzielbare höhere Geschwindigkeit und ergänzend durch die Verwendung mehrerer Aufzugskabinen in einem Aufzugsschacht eine hohe Förderleistung erzielt werden. Besonders effektiv ist hierbei ein Kreisbetrieb der Aufzugskabinen, wobei ein Aufzugsschacht für die Aufwährtsfahrt und ein zweiter Schacht für die Abwärtsfahrt verwendet werden.

Von Vorteil ist es, wenn der Linearmotor mehrere im Abstand zueinander angeordnete Reihen von Statorwicklungen umfaßt, die jeweils zwischen einander gegenüberliegenden Erregermagnetreihen angeordnet sind. Auf diese Weise kann die Motorkraft bei gleicher Motorhöhe und nahezu gleichem Motorvolumen vervielfältigt werden.

Erfindungsgemäß kann vorgesehen sein, daß jeder Statorwicklung jeweils zwei Erregermagnetreihen zugeordnet sind, die auf der Vorder- bzw. Rückseite der Statorwicklung positioniert sind. Kommen jedoch mehrere, im Abstand zueinander angeordnete Statorwicklungen zum Einsatz, so kann vorgesehen sein, daß zwischen zwei benachbarten Reihen von Statorwicklungen nur eine Reihe Erregermagnete angeordnet ist, deren Nord- und Südpole den Statorwicklungen gegenüberstehen. Auf diese Weise kann die Konstruktion der mittleren Erreger vereinfacht und das Gewicht etwas reduziert werden.

Die Erregermagnete können beispielsweise in Form von Elektromagneten ausgebildet sein. Da hierfür jedoch eine zusätzliche Spannungsversorgung und entsprechende Versorgungskabel erforderlich sind, ist es besonders vorteilhaft, wenn die Erregermagnete als Dauermagnete ausgebildet sind.

Von Vorteil ist es, wenn die Statorwicklungen, d.h. die Primärspulen des Linearmotors, von einem nicht magnetischen Gehäuse umgeben sind. Dadurch wird eine besonders stabile Konstruktion erzielt, ohne daß der Magnetfeldverlauf durch das Gehäuse beeinflußt wird. Das Gehäuse kann zum Beispiel hergestellt werden durch eine Kunststoffummantelung der Primärspulen.

In manchen Fällen, wenn die Konstruktion besonders stark belastet wird, kann es vorteilhaft sein, die Statorwicklungen mit zusätzlichen, an einem Statorträger befestigten Halteelementen zu stützen.

Bei einer bevorzugten Konstruktion sind die Reihen der Statorwicklungen an stabförmigen Halteelementen aus nicht magnetischem Material gehalten. Aufgrund der stabförmigen Ausgestaltung wird die erforderliche Masse zur Stabilisierung der Statorwicklungen sehr gering gehalten. Die Verwendung eines nicht magnetischen Materials hat zur Folge, daß der Verlauf des magnetischen Feldes lediglich durch die Ausgestaltung der Statorwicklungen und der Erregermagnete bestimmt wird, nicht aber durch das Vorliegen zusätzlicher Halteelemente.

Die Halteelemente können an einem an einer Innenwand des Aufzugsschachts oder an der Aufzugskabine fixierbaren Statorträger festgelegt sein. So kann beispielsweise vorgesehen sein, daß der Statorträger an einer Seitenwand des Aufzugsschachts befestigt ist und von diesem, senkrecht zur Wand der Aufzugskabine ausgerichtet, die Statorwicklungen abstehen.

Günstig ist es, wenn sich die den unterschiedlichen Phasen zugeordneten Statorwicklungen gegenseitig überlappen.

Eine vorteilhafte Ausführungsform zeichnet sich dadurch aus, daß die Reihe der Statorwicklungen in kurze Segmente aufteilbar ist, die beweglich befestigbar sind. Dies ermöglicht eine Ausgestaltung, bei der die Aufzugskabine auch horizontal bewegt werden kann.

Hierbei ist es von Vorteil, wenn mittels der beweglichen Statorsegmente, d. h. der Segmente der Reihe der Statorwicklungen, eine Weiche ausbildbar ist.

Günstig ist es, wenn die Statorwicklungen im wesentlichen ebene Polflächen ausbilden.

Bei einer besonders bevorzugten Ausgestaltung des erfindungsgemäßen Linearmotors ist vorgesehen, daß die Polflächen der Statorwicklungen breiter sind als die Polflächen der Erregermagnete. Die Anordnung der Statorwicklungen zwischen zwei einander gegenüberliegenden Erregermagnetreihen ermöglicht es in diesem Fall, die Aufzugskabine in der Ebene parallel zu den Polflächen der Statorwicklungen, also je nach Orientierung der Polflächen seitlich oder in Tiefenrichtung, in leichten Bögen zu verfahren, ohne daß ein Zusatzrahmen erforderlich ist. Auf diese Weise ist auch eine Bogenfahrt der Aufzugskabine erzielbar, zum Beispiel ein Übergang von Vertikalfahrt zu Horizontalfahrt.

Während aufgrund der erfindungsgemäßen Anordnung der Statorwicklungen für diese keine zusätzlichen Feldführungen erforderlich sind und sie deshalb eisenlos ausgestaltet sein können, ist es von Vorteil, wenn die außenliegenden, nur einseitig einer Reihe Statorwicklungen gegenüberstehenden Erregermagnete auf ihrer den Statorwicklungen abgewandten Seite über Joche miteinander verbunden sind. Diese ermöglichen eine Rückführung des magnetischen Feldes.

Derartige Joche sind jedoch bei der Verwendung mehrerer, im Abstand zueinander angeordneter Reihen von Statorwicklungen vorteilhafterweise lediglich für die außenliegenden Erregermagnete auf deren den Statorwicklungen abgewandten Seiten vorgesehen. Für die zwischen zwei benachbarten Statorwicklungen positionierten Erregermagnete sind derartige Joche nicht erforderlich, da das Magnetfeld geradlinig durch diese Erregermagnete hindurch verläuft. Durch die Aufteilung in mehrere, im Abstand zueinander angeordnete Statorwicklungen kann somit beim erfindungsgemäßen Linearmotor Eisenmasse am Erreger eingespart und damit eine besonders große Förderleistung erzielt werden.

Eine weitere Massen- und Gewichtseinsparung kann dadurch erzielt werden, daß die Materialstärke der Joche im Bereich zwischen zwei benachbarten Erregermagneten stärker ist als in Höhe der Erregermagnete. Die Materialstärke der Joche ist somit an den auftretenden magnetischen Fluß angepaßt. Dieser ist zwischen zwei benachbarten Erregermagneten besonders groß, während er in Höhe der Erregermagnete geringere Werte annimmt.

Die Joche sind vorteilhafterweise an nicht magnetischen Stützen gehalten.

Die Stützen können beispielsweise aus Aluminium oder aus einem Verbundwerkstoff gefertigt sein. Durch die Stützen wird der Feldverlauf nicht beeinträchtigt und gleichzeitig kann durch eine geeignete, dem Fachmann bekannte Profilbildung der Stützen auch bei Verwendung relativ geringer Massen eine sehr hohe mechanische Stabilität der Stützen erzielt werden.

Zur Ausbildung eines linearmotorbetriebenen Aufzugs sind die Stützen an der Aufzugskabine oder an der Innenwand des Aufzugsschachts fixierbar. So kann beispielsweise vorgesehen sein, daß an einer Seitenwand der Aufzugskabine jeweils im Abstand zueinander zwei Stützen fixiert sind zur Halterung der Joche, an denen wiederum die außenliegenden Erregermagnetreihen festgelegt sind. Zwischen den im Abstand zueinander angeordneten Stützen können von der Seitenwand der Aufzugskabine ferromagnetische Bleche senkrecht abstehen, an denen die zwischen zwei benachbarten Statorwicklungen positionierten Erregermagnetreihen gehalten sind. Mit ihren Polflächen parallel zu den Erregermagnetreihen orientierte Statorwicklungen wiederum können senkrecht von einem Statorträger abstehen, der an der gegenüberliegenden Wand des Aufzugsschachts gehalten ist.

Ein derartiger Linearmotor kann zu beiden Seiten der Aufzugskabine vorgesehen sein.

Anstatt die Statorwicklungen an der Wand des Aufzugsschachts und die Erregermagnete an der Aufzugskabine anzuordnen, kann auch vorgesehen sein, die Erregermagnete an der Schachtwand zu fixieren und die korrespondierenden Statorwicklungen an der Aufzugskabine zu befestigen.

Der erfindungsgemäße Linearmotor kann sowohl für den Direktantrieb der Aufzugskabine verwendet werden als auch für Seilaufzüge mit Gegengewicht. Hierbei ist es möglich, die Statorwicklungen am Gegengewicht anzuordnen und die Erregermagnete an der Aufzugsschachtwand. Es ist allerdings auch eine umgekehrte Anordnung möglich, bei der die Statorwicklungen an der Aufzugsschachtwand und die Erregermagnete am Gegengewicht fixiert sind. Ebenso kann natürlich auch bei Aufzügen mit Gegengewicht die Aufzugskabine direkt angetrieben werden, indem der Linearmotor zwischen Aufzugskabine und Schachtwand angeordnet ist.

Wie bereits erwähnt, können die Erregermagnete sowohl als Elektromagnete als auch als Dauermagnete ausgestaltet sein. Denkbar ist auch eine Konstruktion, bei der eine Kombination derartiger Magnete zum Einsatz kommt.

Der erfindungsgemäße Linearmotor kann einseitig zwischen einer Aufzugsschachtwand und der korrespondierenden Seitenwand der Aufzugskabine oder - besonders bevorzugt - an zwei einander gegenüberliegenden Seiten der Aufzugskabine angeordnet sein. Außerdem kann er in Form einer Rucksackaufhängung zwischen der Rückwand der Aufzugskabine und der dieser zugewandten Rückwand des Aufzugsschachts positioniert sein.

Die Polflächen der Statorwicklungen sowie die entsprechenden Erregermagnete können sowohl senkrecht als auch parallel zu den seitlichen Schachtwänden ausgerichtet sein. Wie bereits voranstehend beschrieben, kann je nach Orientierung der Polflächen der Statorwicklungen mit Hilfe des erfindungsgemäßen Linearmotors eine seitliche oder rückwändige Bogenfahrt der Aufzugskabine erzielt werden.

Für eine Bogenfahrt der Aufzugskabine ist es von besonderem Vorteil, wenn die Statorwicklungen einer Reihe beweglich miteinander verbunden sind. In diesem Fall können auch bewegliche Weichenzungen realisiert werden, wodurch ein Übersetzen von Kabinen von einem Aufzugschacht in einen anderen ermöglicht wird.

Bei einer besonders bevorzugten Ausgestaltung ist vorgesehen, daß die Reihe der Statorwicklungen an der Innenwand des Aufzugsschachts fixierbar sind und jede Statorwicklung sich in vertikaler Richtung über einen Abschnitt erstreckt, der länger ist als die Bauhöhe der Erregermagnete an der Aufzugskabine. Dadurch kann ein guter Wirkungsgrad erzielt werden, indem nur diejenigen Statorwicklungen stromführend ausgestaltet werden, innerhalb derer sich die Aufzugskabine befindet.

Die nachfolgende Beschreibung einer bevorzugten Ausführungsform der Erfindung dient im Zusammenhang mit der Zeichnung der näheren Erläuterung. Es zeigen:
- Figur 1:: eine schematische Draufsicht auf eine Aufzugskabine mit erfindungsgemäßen Linearmotoren;
- Figur 2:: eine schematische Draufsicht auf einen zum Antrieb der Aufzugskabine aus Figur 1 zum Einsatz kommenden Linearmotor;
- Figur 3:: eine Schnittdarstellung längs der Linie 3-3 in Figur 2;
- Figur 4:: eine schematische, perspektivische Darstellung einer Reihe Statorwicklungen in demontiertem Zustand;
- Figur 5:: eine schematische, perspektivische Darstellung einer alternativen Anordnung der Reihe der Statorwicklungen und
- Figur 6:: eine Schnittdarstellung längs der Linie 6-6 in Figur 5.

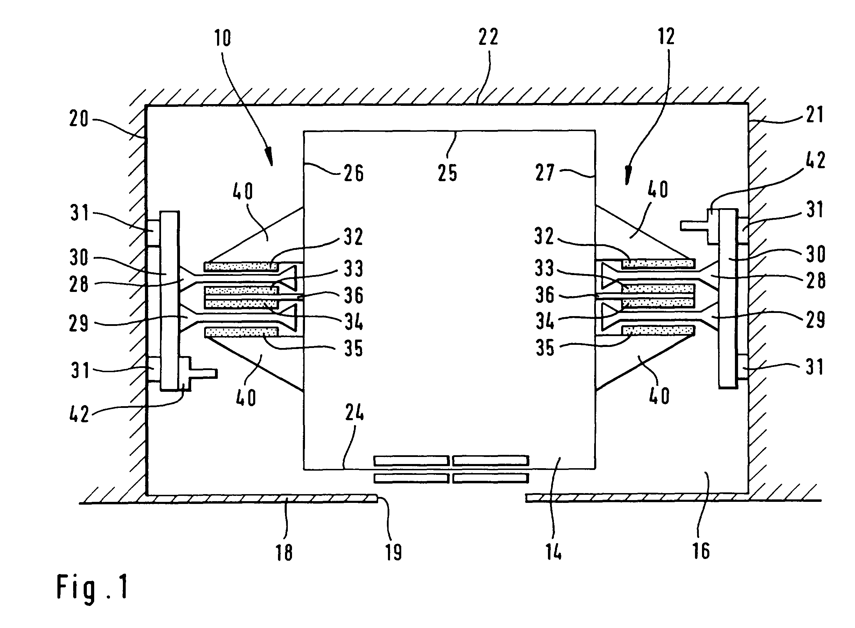

In Figur 1 ist eine mittels identisch ausgebildeter Synchronlinearmotoren 10 und 12 direkt angetriebene Aufzugskabine 14 dargestellt, die in einem Aufzugsschacht 16 verfahrbar ist. Dieser umfaßt eine Vorderwand 18 mit einer Öffnung 19, quer zur Vorderwand 18 verlaufende Seitenwände 20 und 21 sowie eine parallel zur Vorderwand ausgerichtete Rückwand 22. Die mittig im Aufzugsschacht 16 angeordnete Aufzugskabine 14 weist ebenfalls eine Vorderwand 24 und eine Rückwand 25 auf, die parallel zu den entsprechenden Vorder- und Rückwänden 18 bzw. 22 des Aufzugsschachts angeordnet sind, sowie Seitenwände 26 und 27, die im Abstand zu den entsprechenden Seitenwänden 20 bzw. 21 des Aufzugsschachts 16 verlaufen. Zwischen den Seitenwänden der Aufzugskabine 14 und des Aufzugsschachts 16 ist jeweils ein Linearmotor 10 bzw. 12 angeordnet.

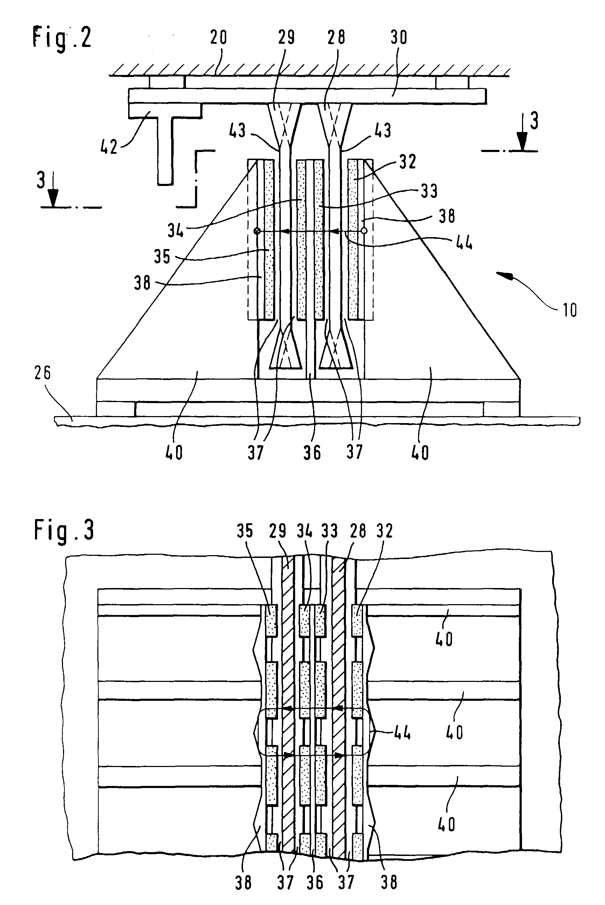

Die Linearmotoren 10 und 12 sind identisch ausgebildet und umfassen jeweils zwei sich längs des Aufzugsschachts erstrekkende Reihen von Statorwicklungen 28 und 29, die im Abstand und parallel zueinander angeordnet sind und senkrecht von einem Statorträger 30 abstehen, der mittels Verankerungen 31 an der Seitenwand 20 bzw. 21 des Aufzugsschachts 16 gehalten ist. Die Polflächen der Statorwicklungen 28, 29 sind quer zu den Seitenwänden 20 und 21 ausgerichtet. Den Reihen der Statorwicklungen 28 und 29 stehen jeweils beidseitig in einem Abstand in Form eines Luftspalts 37 Permanentmagnetreihen 32 und 33 bzw. 34 und 35 gegenüber, wobei die zwischen den Statorwicklungen 28 und 29 positionierten Permanentmagnetreihen 33 und 34 an den einander abgewandten Außenseiten eines Haltebleches 36 fixiert sind, während die außenliegenden, nur einseitig einer Reihe Statorwicklungen 28 bzw. 29 gegenüberliegenden Permanentmagnetreihen 32 und 35 auf ihrer den Statorwicklungen abgewandten Außenseite über in den Figuren 2 und 3 dargestellte Joche 38 an senkrecht von den Seitenwänden 26 und 27 der Aufzugskabine 14 abstehenden Polabstützungen 40 gehalten sind.

Zum Antrieb der Aufzugskabine 14 wird in an sich bekannter Weise in den Reihen der Statorwicklungen 28 und 29 ein magnetisches Wanderfeld erzeugt. Dies hat zur Folge, daß aufgrund der Reihe der Permanentmagnete 32 bis 35 auf die Aufzugskabine 14 eine Schubkraft in vertikaler Richtung ausgeübt wird. Die Permanentmagnete 32 bis 35 bilden somit die Erregermagnete der Linearmotoren 10, 12, und die Statorwicklungen 28, 29 stellen die Primärspulen dar.

Zusätzlich zu den Statorwicklungen 28 und 29 ist am Statorträger 30 eine Führungsschiene 42 gehalten, die mit in der Zeichnung nicht dargestellten, an sich bekannten und an der Aufzugskabine 14 angeordneten Führungsrollen zusammenarbeitet zur Führung der Aufzugskabine 14 innerhalb des Aufzugsschachts 16.

Der Linearmotor 10 ist in den Figuren 2 und 3 vergrößert dargestellt. Wie aus Figur 3 deutlich wird, sind in vertikaler Richtung längs der Reihen der Statorwicklungen 28 und 29 beidseitig jeweils eine Vielzahl von Permanentmagnete aufgereiht, wobei die Permanentmagnete der außenliegenden Permanentmagnetreihen 32 bzw. 35 jeweils über die Joche 38 miteinander verbunden und an Polabstützungen 40 gehalten sind. Demgegenüber weisen die zwischen den Reihen der Statorwicklungen 28 und 29 positionierten mittleren Permanentmagnetreihen 33 und 34 keine zugeordneten Joche auf, sie sind vielmehr unmittelbar an dem Halteblech 36 befestigt, das aus einem ferromagnetischen Material gefertigt ist. Die Materialstärke der Joche 38 ist zwischen zwei benachbarten Permanentmagneten relativ hoch und nimmt in Richtung auf die Permanentmagnete jeweils ab. Die Joche 38 sind über die Polabstützungen 40 an den Seitenwänden 26 bzw. 27 der Aufzugskabine 14 gehalten. Um den Verlauf des Magnetfelds nicht zu beeinträchtigen, sind die Polabstützungen aus einem nicht magnetischen Material gefertigt, beispielsweise aus Aluminiumprofilen oder leichten Verbundwerkstoffen. Mittels der Polabstützungen 40 werden die durch das Magnetfeld erzeugten starken Normalkräfte an den äußeren Permanentmagnetreihen 32 und 35 kompensiert. Demgegenüber treten an den Statorwicklungen 28 und 29 praktisch keine Horizontalkräfte auf. Um ihnen eine hohe mechanische Stabilität zu verleihen, sind sie jeweils in ein Gehäuse 43 eingegossen, welches keine Bestandteile aus ferromagnetischem Material aufweist. Das Gehäuse 43 wird günstigerweise hergestellt durch eine glatte Ummantelung der Spulen mit einer Kunststoff- oder Kunstharzschicht, die auch auf einfache Weise durch Fasern verstärkbar ist.

Der bei den Linearmotoren 10 und 12 auftretende Magnetfeldverlauf ist in den Figuren 2 und 3 exemplarisch durch eine Feldlinie 44 dargestellt. Aufgrund der parallelen Anordnung der Permanentmagnetreihen 32 bis 35 und der zwischen den Permanentmagnetreihen angeordneten Statorwicklungen 28 und 29 wird ein Feldverlauf erzeugt, bei dem die Feldlinien senkrecht und geradlinig durch die Permanentmagnete und die Statorwicklungen hindurchtreten. Da die Statorwicklungen 28 und 29 eisenlos ausgebildet sind, treten praktisch keine Querkräfte zwischen den Permanentmagnetreihen und den Statorwicklungen auf, und die Statorwicklungen 28 und 29 weisen nur ein relativ geringes Gewicht auf.

Grundsätzlich könnten statt der Permanentmagnete auch Elektromagnete als Erregermagnete für die Linearmotoren 10 und 12 zum Einsatz kommen. Die Verwendung von Permanentmagneten ermöglicht es jedoch, die Luftspalte 37 zwischen den Permanentmagneten und den Statorwicklungen ohne zusätzlichen Energieaufwand auf die für die herkömmliche Rollenführung notwendige Größe auszulegen.

Da bei den vorliegenden Linearmotoren 10 und 12 die zwischen den Statorwicklungen 28 und 29 positionierten Permanentmagnete unmittelbar am ferromagnetischen Halteblech 36 gehalten sind, ist für diese kein Joch erforderlich, denn das Magnetfeld verläuft in diesem Bereich geradlinig durch die entsprechenden Permanentmagnete hindurch. Nur für die Rückführung des Magnetfelds ist an den außenliegenden Permanentmagnetreihen 32 und 35 jeweils ein Joch 38 erforderlich, wobei für die Joche 38 ein Eisenmaterial zum Einsatz kommt. Durch die Verwendung mehrerer, im Abstand zueinander angeordneter Statorwicklungen, zwischen denen jeweils Permanentmagnete positioniert sind, kann somit bei den erfindungsgemäßen Linearmotoren 10 und 12 Eisenmasse eingespart werden. Eine größere Förderleistung kann daher vorteilhaft erzielt werden, indem mehrere Statorwicklungen nebeneinander angeordnet sind. Demgegenüber hätte eine Vergrößerung der Polfläche der Statorwicklungen zur Folge, daß mehr Jochmasse benötigt würde und daß außerdem die Normalkräfte zunehmen würden. Dies wiederum würde es erforderlich machen, die Polabstützungen 40 stabiler und somit auch schwerer auszubilden.

Wie bereits beschrieben, sind die Joche 38 an den Stellen geringeren magnetischen Flusses, also in Höhe der Permanentmagnete, dünner ausgestaltet als zwischen zwei benachbarten Permanentmagneten. Dies hat ebenfalls eine Massen- und Gewichtseinsparung zur Folge.

Wie sich insbesondere aus Figur 3 ergibt, sind die Polabstützungen 40 jeweils unmittelbar hinter den Permanentmagneten angeordnet. Alternativ könnten die Polabstützungen 40 auch jeweils zwischen zwei benachbarten Permanentmagneten an den dickeren Bereichen der Joche 38 positioniert sein. Bei der in der Zeichnung dargestellten Konstruktion kann jedoch die Befestigung der Joche 38 an den Polabstützungen 40 auf besonders einfache Weise, beispielsweise durch Festschrauben, erfolgen.

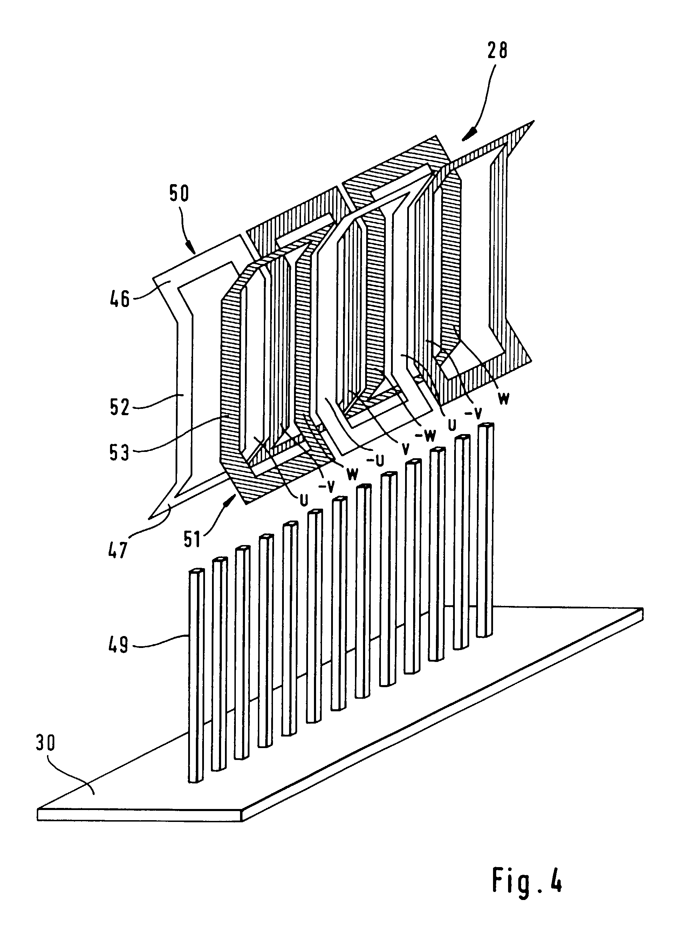

Die beiden Reihen der Statorwicklungen 28 und 29 sind identisch ausgestaltet. In Figur 4 ist ein vertikaler Abschnitt der Reihe der Statorwicklungen 28 schematisch dargestellt. Die Reihe umfaßt jeweils eine Vielzahl längs des Aufzugsschachts 16 aufgereihter Wicklungen zu den einzelnen Drehstromphasen. Diese sind in Figur 4 durch die Symbole u, v und w angegeben. Jeweils zwei benachbarte Wicklungen 50, 51 stehen einander gegenüber und überlappen sich in vertikaler Richtung derart, daß die Sehnen 52 und 53 der Wicklungen ungefähr in einer Ebene liegen. Die Wicklungen verlaufen somit im wesentlichen in einer Ebene, d.h. die Polflächen der Reihe der Statorwicklungen 28 und 29 sind jeweils flächig ausgestaltet. Lediglich die parallel zum Statorträger 30 verlaufenden Wicklungsköpfe 46 und 47 sind zur Seite gespreizt. Zwischen den mittleren, quer zum Statorträger 30 ausgerichteten Sehnen 52 und 53 der einander gegenüberstehenden Wicklungen 50 und 51 greifen bei der in Figur 4 dargestellten Ausführungsform zur Stützung Haltestäbe 49 aus einem nicht magnetischem Werkstoff ein, welche an dem Statorträger 30 gehalten sind und senkrecht von diesem abstehen. Zur Erzielung einer besseren Darstellbarkeit sind die Wicklungen der einzelnen Drehstromphasen u, v und w in Figur 4 im Abstand zu den Haltestäben 49 dargestellt.

Die Halterung der Wicklungen kann jedoch auch ohne den Einsatz der Haltestäbe 49 erfolgen. Wird die Anordnung der Wicklungen ohne Haltestäbe ausgeführt, so kann durch Verringerung des Abstandes zwischen den Wicklungen der Wirkungsgrad erhöht werden. In diesem Fall erfolgt die Ausführung des Gehäuses 43 bzw. die Ummantelung der Wicklungen derart, daß eine ausreichende Stabilität der Reihe der Statorwicklungen und eine gute Kraftübertragung von den Statorwicklungen auf den Statorträger 30 gewährleistet ist. Dies kann zum Beispiel erreicht werden durch Ummantelung der Wicklungen und insbesondere der Wicklungsköpfe mit einer Schicht aus faserverstärktem Kunststoff und einer Verschraubung und/oder Verzahnung mit dem zum Beispiel gelochten Statorträger 30. Dabei wird eine ausreichende Befestigung noch dadurch begünstigt, daß am Statorträger 30 jeweils verbreiterte Wicklungsköpfe anliegen.

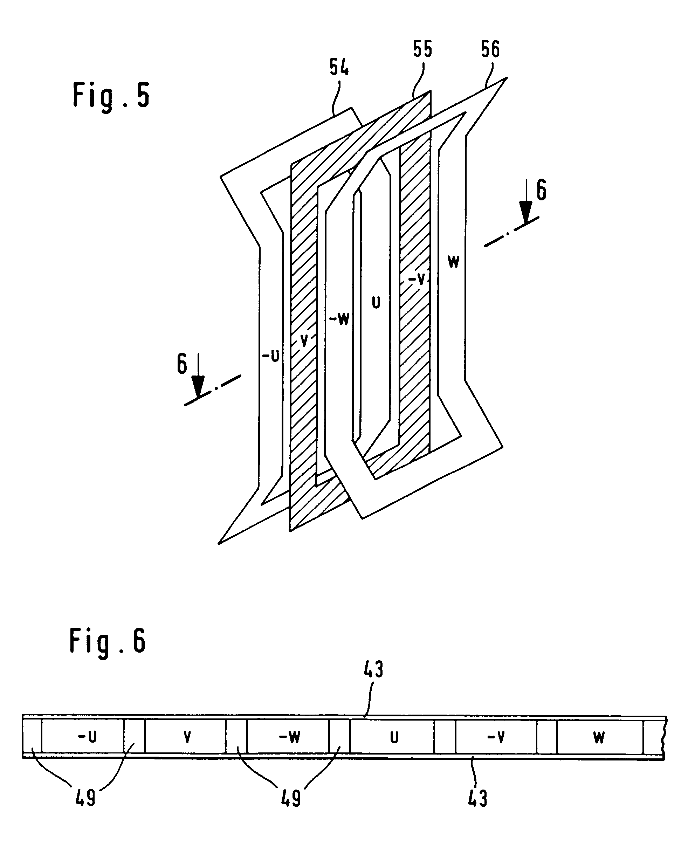

Alternativ können statt drei Stromphasen auch nur zwei Phasen verwendet werden. Dies hat eine einfachere Herstellung der Reihe der Statorwicklungen zur Folge sowie eine einfachere Montage. Des weiteren sind die Wicklungsköpfe bei einer zweiphasigen Wicklung schmäler als bei einer dreiphasigen. Zusammen mit einer entsprechenden Luftspaltbreite ist es hierbei möglich, die Statorwicklungen aus den Zwischenräumen zwischen den Permanentmagneten seitlich herauszuziehen. Dies ist vorteilhaft für die Montage oder Demontage der Aufzugskabine oder des Antriebs. Die zweiphasige Wicklung kann ebensoleicht wie die dreiphasige Wicklung in Segmente zerlegt werden, wie dies nachfolgend unter Hinweis auf Figur 5 beschrieben ist.

In Figur 5 ist eine alternative Anordnung einer dreiphasigen Statorwicklung schematisch dargestellt. Bei dieser Anordnung überlappen sich die Wicklungen derart, daß die Sehnen dreier benachbarter Wicklungen 54, 55, 56 lückenlos die Polfläche überdecken. Die Statorwicklungen können bei dieser Anordnung in kleine Segmente zerlegt werden. Die Länge dieser Segmente beträgt das Doppelte der Polteilung.

In Figur 6 ist ein Schnitt durch die Wicklungsanordnung nach Figur 5 dargestellt, wobei die Wicklungen 54, 55, 56, wie voranstehend unter Bezugnahme auf Figur 4 beschrieben, an den Haltestäben 49 gehalten und vom Gehäuse 43 umgeben sind. Hier ist zu erkennen, daß die mit den Phasen u, v und w korrespondierenden Sehnen der Wicklungen lückenlos in einer Ebene angeordnet sind und dadurch die kleinstmögliche Segmentierung einer dreiphasigen Wicklung erlauben.

Bei den in den Figuren 1 bis 3 dargestellten Linearmotoren 10 und 12 verlaufen die Polflächen der Reihen der Statorwicklungen 28 und 29 senkrecht zu den Seitenwänden 26 und 27 der Aufzugskabine 14. Denkbar ist jedoch auch eine um 90° um eine vertikale Achse gedrehte Konstruktion, bei der die Polflächen parallel zu den Seitenwänden 26 und 27 verlaufen.

Die erfindungsgemäßen Linearmotoren 10, 12 haben den Vorteil, daß das Magnetfeld des Motors durch die Bewegung der Aufzugskabine 14 nicht verändert wird. Es wirken horizontal auf den Statorträger 30 praktisch gar keine und auf die Polabstützungen 40 nur statische Kräfte. Die Linearmotoren 10 und 12 besitzen des weiteren keine störenden Nutrastmomente. Folglich ist die Schubkraft sehr homogen, und es entstehen im wesentlichen keine Geräusche. Da die Statorwicklungen 28 und 29 kein Eisenmaterial enthalten, können auf sie auch keine Kräfte senkrecht zur Polfläche einwirken. Kleinere Normalkräfte entstehen lediglich durch Streufelder an den Wicklungsköpfen 46 und 47 und den Magnetenden. Diese geringen Kräfte können jedoch durch konventionelle Rollenführungen der Aufzugskabine 14 leicht ausgeglichen werden. Demgegenüber werden durch eisenbehaftete Statorwicklungen erhebliche Normalkräfte bewirkt.

Die erfindungsgemäßen Linearmotoren 10 und 12 haben außerdem den Vorteil, daß seitlich auf die Statorwicklungen 28 und 29 keine Momente wirken. Biegemomente treten vielmehr nur in Schubrichtung, d.h. in vertikaler Richtung auf. In dieser Richtung besitzen die Linearmotoren 10 und 12 jedoch ihre größte Stabilität. Vorteilhaft ist außerdem, daß praktisch keine Geräusche durch Magnetostriktion entstehen.

## Patentansprüche

1. Linearmotor für Aufzüge zum Antrieb einer in einem Aufzugsschacht geführten Aufzugskabine mit mindestens einer am Aufzugsschacht oder an der Aufzugskabine festlegbaren Reihe Statorwicklungen und mit mindestens einer Reihe Erregermagnete abwechselnder Polarität, die den Statorwicklungen in einem Abstand gegenüberliegen und an der Aufzugskabine beziehungsweise am Aufzugsschacht fixierbar sind, dadurch gekennzeichnet, daß die Statorwicklungen (28; 29) eisenlos ausgebildet und zwischen zwei einander gegenüberliegenden Erregermagnetreihen (32, 33; 34, 35) angeordnet sind.

2. Linearmotor nach Anspruch 1, dadurch gekennzeichnet, daß der Linearmotor (10; 12) mehrere, im Abstand zueinander angeordnete Reihen von Statorwicklungen (28, 29) umfaßt, die jeweils zwischen einander gegenüberliegenden Erregermagnetreihen (32, 33 bzw. 34, 35) angeordnet sind.

3. Linearmotor nach Anspruch 2, dadurch gekennzeichnet, daß zwischen zwei benachbarten Reihen von Statorwicklungen (28, 29) nur eine Reihe Erregermagnete angeordnet ist, deren Nord- und Südpole den Statorwicklungen (28, 29) gegenüberliegen.

4. Linearmotor nach Anspruch 2 oder 3, dadurch gekennzeichnet, daß die zwischen benachbarten Reihen von Statorwicklungen (28, 29) angeordneten Erregermagnetreihen (33, 34) an einer Halterung aus ferromagnetischem Material gehalten sind.

5. Linearmotor nach Anspruch 4, dadurch gekennzeichnet, daß die Halterung als ferromagnetisches Halteblech ausgestaltet ist.

6. Linearmotor nach einem der voranstehenden Ansprüche, dadurch gekennzeichnet, daß die Erregermagnete als Dauermagnete ausgebildet sind.

7. Linearmotor nach einem der voranstehenden Ansprüche, dadurch gekennzeichnet, daß die Statorwicklungen (28, 29) jeweils von einem nicht magnetischen Gehäuse (43) umgeben sind.

8. Linearmotor nach einem der voranstehenden Ansprüche, dadurch gekennzeichnet, daß die Reihe der Statorwicklungen (28, 29) an stabförmigen Halteelementen (49) aus nicht magnetischem Material gehalten ist.

9. Linearmotor nach Anspruch 8, dadurch gekennzeichnet, daß die Halteelemente (49) an einem an einer Innenwand (20; 21) des Aufzugsschachts (16) oder an der Aufzugskabine (14) fixierbaren Statorträger (30) festgelegt sind.

10. Linearmotor nach einem der voranstehenden Ansprüche, dadurch gekennzeichnet, daß die Reihe der Statorwicklungen in kurze Segmente aufteilbar ist, die beweglich befestigbar sind.

11. Linearmotor nach Anspruch 10, dadurch gekennzeichnet, daß durch bewegliche Statorsegmente eine Weiche ausbildbar ist.

12. Linearmotor nach einem der voranstehenden Ansprüche, dadurch gekennzeichnet, daß sich die den unterschiedlichen Phasen zugeordneten Statorwicklungen gegenseitig überlappen.

13. Linearmotor nach einem der voranstehenden Ansprüche, dadurch gekennzeichnet, daß die Statorwicklungen im wesentlichen ebene Polflächen ausbilden.

14. Linearmotor nach einem der voranstehenden Ansprüche, dadurch gekennzeichnet, daß die außenliegenden, nur einseitig einer Reihe Statorwicklungen (28 bzw. 29) gegenüberstehenden Erregermagnete auf ihrer den Statorwicklungen (28 bzw. 29) abgewandten Seite über Joche (38) miteinander verbunden sind.

15. Linearmotor nach Anspruch 14, dadurch gekennzeichnet, daß die Materialstärke der Joche (38) im Bereich zwischen zwei benachbarten Erregermagneten stärker ist als in Höhe der Erregermagnete.

16. Linearmotor nach Anspruch 14 oder 15, dadurch gekennzeichnet, daß die Joche (38) an nicht magnetischen Stützen gehalten sind.

17. Linearmotor nach Anspruch 16, dadurch gekennzeichnet, daß die Stützen aus Aluminium oder einem Verbundwerkstoff gefertigt sind.

18. Linearmotor nach Anspruch 16 oder 17, dadurch gekennzeichnet, daß die Stützen an der Aufzugskabine (14) oder an der Innenwand (20, 21) des Anfangsschachts (16) fixierbar sind.

19. Aufzug mit einer in einem Aufzugsschacht verfahrbaren Aufzugskabine, dadurch gekennzeichnet, daß der Aufzug zum Antrieb der Aufzugskabine (14) mindestens einen Linearmotor (10; 12) nach einem der voranstehenden Ansprüche umfaßt.

20. Aufzug nach Anspruch 19, dadurch gekennzeichnet, daß der Antrieb zwei Linearmotoren (10, 12) umfaßt, die jeweils zwischen einer Seitenwand (26 bzw. 27) der Aufzugskabine (14) und der korrespondierenden Seitenwand (20 bzw. 21) des Aufzugsschachts (16) angeordnet sind.

21. Aufzug nach Anspruch 19 oder 20, dadurch gekennzeichnet, daß die Aufzugskabine (14) längs des Aufzugsschachts (16) in einem Bogen verfahrbar ist und daß die Polflächen der Statorwicklungen im Bereich des Bogens breiter sind als die Polflächen der Erregermagnete.

22. Aufzug nach Anspruch 19 bis 21, dadurch gekennzeichnet, daß der Aufzug mit einem Gegengewicht versehen ist und daß der bzw. die Linearmotoren zwischen dem Gegengewicht und den korrespondierenden Schachtwänden und/oder zwischen der Aufzugskabine und den korrespondierenden Schachtwänden angeordnet sind.

## Claims

1. A linear motor for lifts for driving a lift car in a lift shaft, comprising at least one row of stator windings fixable to the lift shaft or the lift car, and at least one row of exciter magnets of alternating polarity arranged opposite the stator windings at a distance therefrom and fixable to the lift car or the lift shaft, characterised in that the stator windings (28, 29) are coreless and are arranged between two opposing rows of exciter magnets (32, 33; 34, 35).

2. A linear motor according to claim 1, characterised in that the linear motor (10, 12) comprises a plurality of spaced rows of stator windings (28, 29) each arranged between opposing rows of exciter magnets (33, 33; 34, 35).

3. A linear motor according to claim 2, characterised in that only one row of exciter magnets, the north and south poles of which are arranged opposite the stator windings (28, 29), is arranged between two adjacent rows of stator windings (28, 29).

4. A linear motor according to claim 2 or 3, characterised in that the rows of exciter magnets (33, 34), arranged between adjacent rows of stator windings (28, 29), are mounted on a mounting comprising ferromagnetic material.

5. A linear motor according to claim 4, characterised in that the mounting is formed as a ferromagnetic mounting plate.

6. A linear motor according to any one of the preceding claims, characterised in that the exciter magnets are formed as permanent magnets.

7. A linear motor according to any one of the preceding claims, characterised in that the stator windings (28, 29) are each surrounded by a non-magnetic housing (43).

8. A linear motor according to any one of the preceding claims, characterised in that the row of stator windings (28, 29) is mounted on rod-shaped mounting members (49) comprising non-magnetic material.

9. A linear motor according to claim 8, characterised in that the mounting members (49) are fixed to a stator carrier (30) fixable to an inner wall (20, 21) of the lift shaft (16) or to the lift car (14).

10. A linear motor according to any one of the preceding claims, characterised in that the row of stator windings is divisible into short segments which are movably mountable.

11. A linear motor according to claim 10, characterised in that a switch is formable by movable stator segments.

12. A linear motor according to any one of the preceding claims, characterised in that the stator windings associated with the different phases mutually overlap.

13. A linear motor according to any one of the preceding claims, characterised in that the stator windings form substantially flat pole surfaces.

14. A linear motor according to any one of the preceding claims, characterised in that the outer exciter magnets, opposing a row of stator windings (28, 29) on one side only, are interconnected by yokes (38) on their side remote from the stator windings (28, 29).

15. A linear motor according to claim 14, characterised in that the material thickness of the yokes (38) is greater in the region between two adjacent exciter magnets than at the level of the exciter magnets.

16. A linear motor according to claim 14 or 15, characterised in that the yokes (38) are mounted on non-magnetic supports.

17. A linear motor according to claim 16, characterised in that the supports are made of aluminium or a composite material.

18. A linear motor according to claim 16 or 17, characterised in that the supports are fixable to the lift car (14) or to the inner wall (20, 21) of the lift shaft (16).

19. A lift comprising a lift car movable in a lift shaft, characterised in that the lift comprises at least one linear motor (10, 12) according to any one of the preceding claims for driving the lift car (14).

20. A lift according to claim 19, characterised in that the drive comprises two linear motors (10, 12) each arranged between a side wall (26, 27) of the lift car (14) and the corresponding side wall (20, 21) of the lift shaft (16).

21. A lift according to claim 19 or 20, characterised in that the lift car (14) is movable in an arc along the lift shaft (16) and in that the pole surfaces of the stator windings are broader in the region of the arc than the pole surfaces of the exciter magnets.

22. A lift according to claims 19 to 21, characterised in that the lift is provided with a counterweight and in that the linear motor or motors is/are arranged between the counterweight and the corresponding shaft walls and/or between the lift car and the corresponding shaft walls.

## Revendications

1. Moteur linéaire pour ascenseur, destiné à l'entraînement d'une cabine d'ascenseur guidée dans une cage d'ascenseur, comportant au moins une rangée d'enroulements de stator susceptibles d'être fixée sur la cage ou sur la cabine d'ascenseur, et comportant au moins une rangée d'aimants d'excitation à polarités alternantes, qui sont situés à distance en face des enroulements de stator et susceptibles d'être fixés sur la cabine ou sur la cage d'ascenseur, respectivement, caractérisé en ce que les enroulements de stator (28 ; 29) sont réalisés sans noyau et sont agencés entre deux rangées d'aimants d'excitation (32, 33 ; 34, 35) opposées l'une à l'autre.

2. Moteur linéaire selon la revendication 1, caractérisé en ce que le moteur linéaire (10; 12) comprend plusieurs rangées d'enroulements de stator (28, 29) agencées à distance les unes des autres, lesquelles sont agencées chacune entre des rangées d'aimants d'excitation (32, 33 et 34, 35) opposées les unes aux autres.

3. Moteur linéaire selon la revendication 2, caractérisé en ce qu'entre deux rangées voisines d'enroulements de stator (28, 29) n'est agencée qu'une seule rangée d'aimants d'excitation dont les pôles nord et sud font face aux enroulements de stator (28, 29).

4. Moteur linéaire selon l'une ou l'autre des revendications 2 et 3, caractérisé en ce que les rangées d'aimants d'excitation agencées entre deux rangées voisines d'enroulements de stator (28, 29) sont maintenues sur un support en matériau ferromagnétique.

5. Moteur linéaire selon la revendication 4, caractérisé en ce que le support est réalisé sous forme de support en tôle ferromagnétique.

6. Moteur linéaire selon l'une quelconque des revendications précédentes, caractérisé en ce que les aimants d'excitation sont réalisés sous forme d'aimants permanents.

7. Moteur linéaire selon l'une quelconque des revendications précédentes, caractérisé en ce que les enroulements de stator (28, 29) sont chacun entourés d'un boîtier (43) non magnétique.

8. Moteur linéaire selon l'une quelconque des revendications précédentes, caractérisé en ce que la rangée des enroulements de stator (28, 29) est maintenue sur des éléments de maintien (49) en forme de barres en matériau non magnétique.

9. Moteur linéaire selon la revendication 8, caractérisé en ce que les éléments de maintien (49) sont fixés sur un porte-stator (30) susceptible d'être fixé sur une paroi intérieure (20 ; 21) de la cage d'ascenseur (16) ou sur la cabine d'ascenseur (14).

10. Moteur linéaire selon l'une quelconque des revendications précédentes, caractérisé en ce que la rangée des enroulements de stator est susceptible d'être divisée en courts segments qui peuvent être fixés de manière mobile.

11. Moteur linéaire selon la revendication 10, caractérisé en ce qu'un aiguillage est réalisé par des segments de stator mobiles.

12. Moteur linéaire selon l'une quelconque des revendications précédentes, caractérisé en ce que les enroulements de stator associés aux différentes phases se chevauchent mutuellement.

13. Moteur linéaire selon l'une quelconque des revendications précédentes, caractérisé en ce que les enroulements de stator forment des surfaces polaires sensiblement planes.

14. Moteur linéaire selon l'une quelconque des revendications précédentes, caractérisé en ce que les aimants d'excitation agencés à l'extérieur, situés d'un côté seulement en face d'une rangée d'enroulements de stator (28, 29), sont reliés les uns aux autres par des culasses (38) sur leur côté détourné des enroulements de stator (28, 29).

15. Moteur linéaire selon la revendication 14, caractérisé en ce que l'épaisseur de matériau des culasses (38) dans la région entre deux aimants d'excitation voisins est plus forte qu'au niveau des aimants d'excitation.

16. Moteur linéaire selon l'une ou l'autre des revendications 14 et 15, caractérisé en ce que les culasses sont maintenues sur des supports non magnétiques.

17. Moteur linéaire selon la revendication 16, caractérisé en ce que les supports sont réalisés en aluminium ou en un matériau composite.

18. Moteur linéaire selon l'une ou l'autre des revendications 16 et 17, caractérisé en ce que les supports sont susceptibles d'être fixés sur la cabine d'ascenseur (14) ou sur la paroi intérieure (20, 21) de la cage d'ascenseur (16).

19. Ascenseur comportant une cabine susceptible d'être déplacée dans une cage d'ascenseur, caractérisé en ce que l'ascenseur comporte pour l'entraînement de la cabine d'ascenseur au moins un moteur linéaire (10 ; 12) selon l'une quelconque des revendications précédentes.

20. Ascenseur selon la revendication 19, caractérisé en ce que l'entraînement comprend deux moteurs linéaires (10, 12) qui sont chacun agencés entre une paroi latérale (26, 27) de la cabine d'ascenseur (14) et la paroi latérale correspondante (20, 21) de la cage d'ascenseur (16).

21. Ascenseur selon l'une ou l'autre des revendications 19 et 20, caractérisé en ce que la cabine d'ascenseur (14) est susceptible d'être déplacée suivant un arc le long de la cage d'ascenseur (16) et en ce que les surfaces polaires des enroulements de stator dans la région de l'arc sont plus larges que les surfaces polaires des aimants d'excitation.

22. Ascenseur selon l'une ou l'autre des revendications 19 à 21, caractérisé en ce que l'ascenseur est pourvu d'un contrepoids et en ce que le(les) moteur(s) linéaire(s) est(sont) agencé(s) entre le contrepoids et les parois de cage correspondantes et/ou entre la cabine d'ascenseur et les parois de cage correspondantes.
